# EUROPÄISCHE PATENTSCHRIFT

(11) **EP 0 544 641 B1**
(45) Veröffentlichungstag und Bekanntmachung des Hinweises auf die Patenterteilung: **27.12.1995**
(21) Anmeldenummer: 92890245.1
(22) Anmeldetag: 19.11.1992
(51) Int. Cl.: A01D 41/14

(54) **Vorbauzusatzgerät für Mähdrescher zur Raps- oder Pferdebohnenernte**
Additional apparatus for combine for harvesting rope-seed or tick-beans
Appareil additionnel pour moissonneuse-batteuse pour la récolte de colza ou fèveroles

(30) Priorität: 25.11.1991 AT 2334/91
(43) Veröffentlichungstag der Anmeldung: 02.06.1993
(73) Patentinhaber: Schrattenecker, Franz, A-4773 Eggerding (AT)
(72) Erfinder: Schrattenecker, Franz, A-4773 Eggerding (AT)
(74) Vertreter: Hübscher, Heiner, Dipl.-Ing.

(56) Entgegenhaltungen:
- BE-A- 744 576
- DE-A- 3 245 372
- DE-C- 977 262
- FR-A- 1 079 944
- FR-A- 1 351 304
- FR-A- 1 544 557
- GB-A- 2 146 217
- US-A- 4 003 384
- US-A- 4 011 709

## Beschreibung

Die Erfindung bezieht sich auf ein Vorbauzusatzgerät für Mähdrescher zur Raps- oder Pferdebohnenernte mit einem eigenen Messerbalken und einem zwischen diesem und dem abgedeckten Schneidwerk des Mähdreschers vorgesehenen, schräg nach hinten ansteigenden, eine Fangtasse bildenden Überleitungsblech, das quer zur Fahrtrichtung verlaufende Erhebungen aufweist.

Da das Schneidwerk eines üblichen für Getreide bestimmten Mähdreschers der Pflanzenstruktur von Raps und auch Pferdebohnen nicht voll gerecht wird, wurde ein Vorbauzusatzgerät entwickelt, dessen eigener Messerbalken die Voraussetzungen für ein einwandfreies Mähen von Raps u. dgl. erfüllt. Dabei sorgt das Überleitungsblech, seinem Namen entsprechend, für eine einwandfreie Überführung des Schnittgutes zu den Einrichtungen des Mähdreschers, zumal dessen Schneidwerk abgedeckt ist und somit keine Stauung des Schnittgutes an ihm mit sich bringen kann. Dennoch sind die bisherigen Vorbauzusatzgeräte nicht voll befriedigend.

Die Rapspflanzen sind in der Erntezeit stark ineinander verfilzt, und die Schoten platzen sehr leicht, so daß die Körner dann ausfallen. Zwar ist das bisherige Überleitungsblech gewissermaßen als Fangtasse für die vorzeitig ausfallenden Körner ausgebildet, doch kommt es bei längerer Arbeitszeit ohne Anheben des Zusatzgerätes zu einer übergroßen Körneransammlung an der Abstufung zwischen dem Messerbalken des Zusatzgerätes und dem Überleitungsblech, was einen Körnerüberlauf auf den Boden und damit einen Körnerverlust zur Folge hat. Gleiches gilt, wenn sich das Zusatzgerät infolge von Bodenunebenheit seitlich neigt, so daß die Körner auf dem Überleitungsblech zu der einen oder anderen Seite rollen und dann bei größerer Ansammlung dort abfallen. Außerdem hat es sich gezeigt, daß die am Boden verbleibenden Pflanzenreste das Überleitungsblech beschädigen können, und daß es zu Schoppungen am hinteren Ende des Überleitungsbleches, also am Beginn des eigentlichen Mähdreschers kommt, die mit entsprechendem Zeit- und Arbeitsaufwand entfernt werden müssen, wenn der ordnungsgemäße Betrieb nicht in Frage gestellt werden soll.

Es ist zwar schon bekannt, das Überleitungsblech als Boden einer Wanne auszubilden (BE-A-744 576), wobei hinter dem Schneidwerk eine Walze zum Ausrichten des Schnittgutes sowie eine schräg aufwärts führende Fördereinrichtung vorzusehen ist. Dabei ist der Wannenboden aber ungeschützt, es besteht die Möglichkeit eines Staus von Schnittgut unterhalb der Wanne und es handelt sich darüber hinaus nicht um ein Vorbauzusatzgerät, sondern um die Dreschmaschine selbst. Es ist ferner bekannt (FR-A-13 51 304), den Wannenboden mit querverlaufenden Erhebungen zu versehen und an den Wannenrändern Gleitkufen anzuordnen. Die quer zur Fahrtrichtung verlaufenden Erhebungen sind aber zylindrisch abgerundet, so daß sie ein Zurückrollen der Körner aus dem Schnittgut kaum verhindern können, und es besteht ebenfalls Staugefahr zwischen den Kufen der Überleitungswanne, wobei es sich wieder um den Mähdrescher selbst und nicht um ein Vorbauzusatzgerät handelt.

Somit liegt der Erfindung die Aufgabe zugrunde, das bekannte Vorbauzusatzgerät so zu verbessern, daß der Körnerverlust auf ein Minimum herabgesetzt und eine Beschädigung des Überleitungsbleches verhindert wird, wobei es auch zu keinen Schoppungen (i.e. ein haufenbildendes Verdichten von Halmgut) unterhalb des Überleitungsbleches kommen soll.

Die Erfindung löst die gestellte Aufgabe dadurch, daß unterhalb des Überleitungsbleches ein vorzugsweise höhenverstellbares Schutz- bzw. Gleitblech angeordnet ist, daß die Erhebungen des Überleitungsbleches aus wenigstens zwei sanft nach hinten ansteigenden und an ihren Hinterenden scharf abfallende Stufen besteht und daß am Überleitungsblech in Fahrtrichtung verlaufende, den Tassenraum unterteilende Leisten vorgesehen sind.

Das Schutz- bzw. Gleitblech verhindert eine Beschädigung des Überleitungsbleches durch die am Boden verbleibenden Pflanzenreste, wobei eine gute Anpassung an die jeweiligen Verhältnisse durch die Höhenverstellbarkeit des Schutz- bzw. Gleitbleches erreicht wird und sogar ein Gleiten auf den Pflanzenresten möglich ist. Durch das Schutz- bzw. Gleitblech werden auch die gegebenenfalls auftretenden, fahrthemmenden Stauungen der Erntegutreste vor dem eigentlichen Mähdrescher vermieden. Durch die besondere Ausbildung des Gleitbleches in Stufenform ergeben sich vor den scharf abfallenden Stufenrückflächen mehrere Sammelräume für die bereits aus den Schoten geplatzten Körner, so daß eine zu große Anhäufung an nur einer Stelle wie bisher verhindert und der Körnerverlust durch das Abfallen vom Überleitungsblech auf ein Mindestmaß beschränkt wird. Die in Fahrtrichtung verlaufenden Leisten bilden ebenfalls Stauwände, um das Abrollen aller Körner nach einer Seite bei Schrägstellung des Überleitungsbleches durch Bodenunebenheiten mit den geschilderten Folgen auszuschließen.

Um eine Anpassung an die jeweilige Arbeitsbreite verschiedener Mähdrescher zu ermöglichen, ohne dem einzelnen Mähdrescher entsprechende Sonderanfertigungen vornehmen zu müssen, ist bzw. sind das Schutzblech und gegebenenfalls das Überleitungsblech aus zwei oder mehreren nebeneinander angeordneten Teilblechen wählbarer Breite zusammengesetzt.

In der Zeichnung ist der Erfindungsgegenstand beispielsweise und rein schematisch dargestellt, wobei Messerbalken, Schneidwerk, Haspel u. dgl. zur besseren Übersichtlichkeit weggelassen sind. Es zeigen
- Fig. 1: die erfindungswesentlichen Teile eines Vorbauzusatzgerätes im in Fahrtrichtung verlaufenden Schnitt,
- Fig. 2: einen zugehörigen Teilquerschnitt nach der Linie II-II der Fig. 1 und
- Fig. 3: einen Teil eines Überleitungsbleches in Draufsicht.

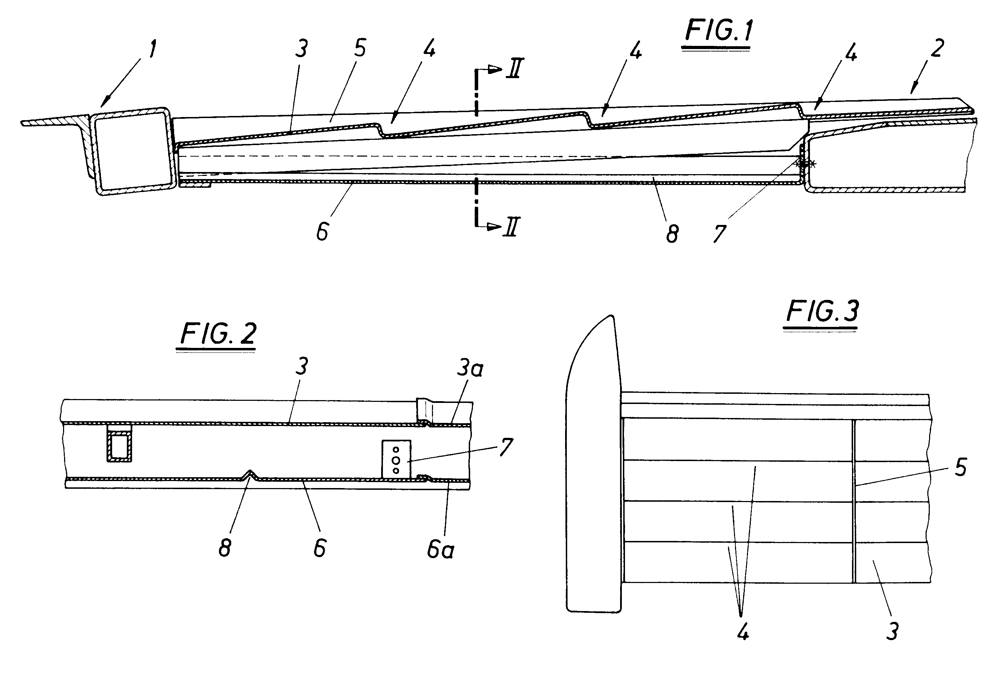

Zwischen dem Messerbalken 1 des Vorbauzusatzgerätes und dem Mähdrescher 2, dessen nicht dargestelltes Schneidwerk abgedeckt ist, befindet sich ein Überleitungsblech 3, das drei sanft nach hinten ansteigende und an ihren Hinterenden scharf abfallende Stufen 4 aufweist. Selbstverständlich ist das Überleitungsblech 3 durch je eine Bordwand seitlich begrenzt und bildet dadurch eine Tasse. Aus den Fig. 1 und 3 ist ersichtlich, daß auf dem Überleitungsblech 3 in Fahrtrichtung verlaufende und den Tassenraum unterteilende Leisten 5 vorgesehen.

Unterhalb des Überleitungsbleches 3 ist ein Schutz- bzw. Gleitblech 6 angeordnet, das am Mähfingerschutz 2 für das Getreideschneidwerk höhenverstellbar befestigt ist, weil an den Befestigungslaschen 7 mehrere übereinander angeordnete Bohrungen für Befestigungsschrauben vorgesehen sind. Das Schutz- bzw. Gleitblech 6 ist zur Versteifung mit Sicken 8 ausgestattet. Wie in Fig. 2 angedeutet, können das Schutzblech 6 und das Überleitungsblech 3 aus mehreren nebeneinander angeordneten Teilblechen 3, 3a, 6, 6a zusammengesetzt sein, wobei beim Hersteller Teilbleche verschiedener Breite auf Lager liegen, um eine Anpassung an die jeweilige Arbeitsbreite verschiedener Mähdrescher zu ermöglichen.

## Patentansprüche

1. Vorbauzusatzgerät für Mähdrescher zur Raps- oder Pferdebohnenernte mit einem eigenen Messerbalken (1) und einem zwischen diesem und dem abgedeckten Schneidwerk des Mähdreschers (2) vorgesehenen, schräg nach hinten ansteigenden, eine Fangtasse bildenden Überleitungsblech (3), das quer zur Fahrtrichtung verlaufende Erhebungen (4) aufweist, dadurch gekennzeichnet, daß unterhalb des Überleitungsbleches (3) ein vorzugsweise höhenverstellbares Schutz- bzw. Gleitblech (6) angeordnet ist, daß die Erhebungen des Überleitungsbleches (3) aus wenigstens zwei sanft nach hinten ansteigenden und an ihrem Hinterende scharf abfallenden Stufen (4) besteht und daß am Überleitungsblech (3) in Fahrtrichtung verlaufende, den Tassenraum unterteilende Leisten (5) vorgesehen sind.

2. Zusatzgerät nach Anspruch 1, dadurch gekennzeichnet, daß das Schutzblech (6) und gegebenenfalls das Überleitungsblech (3) aus zwei oder mehreren nebeneinander angeordneten Teilblechen (3, 3a; 6, 6a) wählbarer Breite zusammengesetzt ist bzw. sind.

## Claims

1. A supplementary front attachment for combine harvesters for rapeseed or horsebean harvesting, having its own cutter bar (1) and a transfer plate (3) provided between the latter and the covered cutting mechanism of the combine harvester (2), the said transfer plate (3) sloping upwards in the rearward direction and forming a collecting tray having elevated portions (4) extending transversely of the direction of travel, characterised in that a preferably vertically adjustable protective or sliding plate (6) is disposed beneath the transfer plate (3), in that the elevated portions of the transfer plate (3) consist of at least two steps (4) rising gently in the rearward direction and falling sharply at their rear end, and in that strips (5) dividing up the tray area are provided on the transfer plate (3) and extend in the direction of travel.

2. A supplementary attachment according to claim 1, characterised in that the protective plate (6) and, if required, the transfer plate (3) is/are made up of two or more plates (3, 3a; 6, 6a) of selectable width disposed side by side.

## Revendications

1. Appareil additionnel pour moissonneuse-batteuse en vue de la récolte de colza ou de féveroles, comprenant une barre de soupe (1) qui lui est propre, ainsi qu'une tôle de transfert (3) qui est prévue entre celle-ci et la barre de coupe recouverte de la moissonneuse-batteuse (2), qui monte obliquement vers l'arrière, qui constitue un dispositif collecteur et qui présente des surélévations (4) s'étendant transversalement par rapport à la direction de la marche, caractérisé par le fait qu'au-dessous de la tôle de transfert (3) est disposée une tôle de protection ou de glissement, respectivement (6), laquelle est de préférence réglable en hauteur, par le fait que les surélévations de la tôle de transfert (3) sont constituées par au moins deux redans (4) qui montent en pente douce vers l'arrière et qui descendent brusquement à leur extrémité arrière, et par le fait qu'il est prévu sur la tôle de transfert (3) des baguettes (5) qui s'étendent dans la direction de la marche et qui divisent l'espace collecteur.

2. Appareil additionnel selon la revendication 1, caractérisé par le fait que la tôle de protection (6) et, le cas échéant, la tôle de transfert (3) est constituée ou sont constituées, respectivement, par deux tôles partielles (3, 3a ; 6, 6a) ou plus qui sont disposées les unes à côté des autres et dont la largeur peut être choisie.
